# EUROPÄISCHE PATENTSCHRIFT

(11) **EP 1 293 685 B1**
(45) Veröffentlichungstag und Bekanntmachung des Hinweises auf die Patenterteilung: **23.03.2005**
(21) Anmeldenummer: 02016151.9
(22) Anmeldetag: 20.07.2002
(51) Int. Cl.: F16B 5/02

(54) **Abstandshalter für die Befestigung eines Gegenstandes an einer eine Dämmschicht aufweisenden Wand**
Spacer for the attachment of an article to a wall with an exterior insulating layer
Espaceur pour la fixation d'un article sur un mur muni d'une couche d'isolation extérieure

(30) Priorität: 13.09.2001 DE 10145122
(43) Veröffentlichungstag der Anmeldung: 19.03.2003
(73) Patentinhaber: fischerwerke Artur Fischer GmbH & Co. KG, 72178 Waldachtal (DE)
(72) Erfinder: Berg, Ralph, 79112 Freiburg (DE); Semmler, Markus, 79312 Emmendingen (DE)

(56) Entgegenhaltungen:
- CH-A- 569 159
- DE-A- 2 852 528
- FR-A- 789 416
- US-A- 3 461 769
- US-A- 4 690 365

## Beschreibung

Die Erfindung betrifft einen Abstandshalter für die Befestigung eines Gegenstandes an einer eine Dämmschicht aufweisenden Wand gemäß dem Oberbegriff des Anspruchs 1.

Zum Wärmeschutz von Gebäuden werden deren Wände mit einer Dämmschicht an der Außenseite versehen, die eine Dicke von mehreren Zentimetern aufweisen kann. Da die Dämmschicht eine geringe mechanische Festigkeit aufweist, bereitet die Befestigung von Gegenständen wie Außenlampen, Briefkästen, Hausnummern oder dgl. an der Außenseite der Wand Probleme, da die Dämmschicht nicht in der Lage ist, Druckkräfte aufzunehmen.

Zur Abstandsbefestigung ist beispielsweise aus der DE 18 72 533 eine Distanzschraube bekannt, die einen vorderen und einen hinteren Gewindeabschnitt aufweist. Mit dem vorderen Gewindeabschnitt lässt sich die Schraube in ein tragendes Bauteil, beispielsweise in einen in ein Bohrloch in einem Mauerwerk eingesetzten Dübel einschrauben. Zugleich mit dem Einschrauben in das tragende Bauteil lässt sich der hintere Gewindeabschnitt in ein zu befestigendes Bauteil, beispielsweise einen Türblockrahmen aus Holz, einschrauben. Weisen beide Gewinde die selbe Steigung auf, hält die Schraube das zu befestigende Bauteil mit einem Abstand vom tragenden Bauteil, den das zu befestigende Bauteil zu Beginn des Einschraubens vom tragenden Bauteil hatte. Eine solche Distanzschraube lässt allerdings nur dann eine Abstandsmontage zu, wenn das im Abstand zu befestigende Bauteil aus einem Material besteht, das einerseits ein Einschneiden des Gewindes der Distanzschraube ermöglicht und andererseits durch die Gewindeverbindung in der Lage ist, Kräfte aufzunehmen. Dies ist üblicherweise nur bei der Befestigung von Gegenständen möglich, die aus Holz oder einem vergleichbaren Werkstoff bestehen.

Aus der CH-A-569 159 ist ein Abstandshalter bekannt, der einen Gewindestab und eine Gewindehülse aufweist, die auf ein Ende des Gewindestabs aufgeschraubt ist. Die Gewindehülse weist ein zusätzliches, kleineres Innengewinde in axialer Verlängerung ihres auf den Gewindestab aufgeschraubten Innengewindes auf, in das eine Befestigungsschraube einschraubbar ist. Zur Verankerung in einem Mauerwerk wird der Gewindestab des bekannten Abstandshalters in einen Dübel eingeschraubt, der in ein Bohrloch im Mauerwerk eingesetzt ist. Zur Abstandseinstellung wird die Gewindehülse auf dem Gewindestab gedreht. Nach der Abstandseinstellung kann ein Gegenstand, beispielsweise eine Trägerschiene, mit einer Befestigungsschraube an der Gewindehülse des Abstandshalters befestigt werden.

Der Erfindung liegt die Aufgabe zugrunde, einen Abstandshalter der vorstehend erläuterten Art in der Weise auszubilden, dass in einfacher Weise eine Befestigung eines Gegenstandes an einer eine Dämmschicht aufweisenden Wand möglich ist.

Diese Aufgabe wird erfindungsgemäß durch die kennzeichnenden Merkmale des Anspruches 1 gelöst. Der erfindungsgemäße Abstandshalter besteht aus einer Distanzschraube mit zwei im Abstand angeordneten Gewindeabschnitten, wobei auf den hinteren Gewindeabschnitt vorzugsweise bereits werksseitig eine Abstandshülse aufgeschraubt ist, die eine über das hintere Ende überstehende Verlängerung mit einer Aufnahmebohrung für eine Befestigungsschraube aufweist. Zur Verankerung der Distanzschraube wird diese mit der aufgeschraubten Abstandshülse durch die Isolierung hindurch in einen im Mauerwerk eingesetzten Dübel eingeführt und soweit mit einem in den Innensechskant der Distanzschraube eingesetzten Werkzeug eingedreht, bis das hintere Stirnende der Abstandshülse bündig mit der Wandoberfläche abschließt. Auf das Stirnende der Abstandshülse wird der zu befestigende Gegenstand aufgelegt und durch Einschrauben einer Befestigungsschraube in die Aufnahmebohrung der Verlängerung der Abstandshülse gegen das Stirnende verspannt. Die an dem befestigten Gegenstand angreifenden Zug-, Druck- und Querkräfte werden nunmehr über die Schraube unmittelbar in den tragfähigen Untergrund eingeleitet. Der erfindungsgemäße Abstandshalter ermöglicht somit Befestigungen von Gegenständen an einer eine Dämmschicht aufweisenden Wand und vermeidet beispielsweise bei verputzten Dämmsystemen, dass die Putzschale durch Risse beschädigt wird.

Die Abstandshülse des erfindungsgemäßen Abstandshalters weist an ihrem hinteren Ende eine als Werkzeugaufnahme ausgebildete Erweiterung der Aufnahmebohrung auf. Damit ist ein Werkzeug zum Eindrehen der Distanzschraube verwendbar, das einen gleichzeitigen Werkzeugeingriff in der Werkzeugaufnahme der Distanzschraube und der Abstandshülse ermöglicht. Dadurch wird beim Eindrehen des Abstandshalters verhindert, dass eine Relativbewegung zwischen Distanzschraube und Abstandshülse entsteht, was im ungünstigsten Fall zur Trennung der beiden Bauteile führen könnte.

Zur Vermeidung einer Kältebrücke ist es zweckmäßig, die Abstandshülse als Kunststoffteil auszubilden. Damit ist es auch möglich, die Abstandshülse ohne vorgeformtes Gewinde direkt auf den Gewindeabschnitt der Distanzschraube aufzuschrauben bzw. zur Befestigung des Gegenstandes die Befestigungsschraube in die Aufnahmebohrung einzudrehen. Zur Vergrößerung der Auflagefläche für den zu befestigenden Gegenstand kann das hintere Stirnende mit einem vorzugsweise als Senkkopf ausgebildeten Rand versehen sein.

Ferner kann der Durchmesser der Aufnahmebohrung für die Befestigungsschraube gegenüber dem vorderen Bohrungsabschnitt der Abstandshülse reduziert sein. Dadurch entsteht in der Innenbohrung eine Schulter, auf der das hintere Stirnende der Distanzschraube beim Aufschrauben der Abstandshülse aufsitzt. Günstige Durchmesserverhältnisse insbesondere auch für die zur Befestigung des Gegenstandes verwendete Befestigungsschraube werden erreicht, wenn der hintere Gewindeabschnitt der Distanzschraube einen größeren Querschnitt als der vordere Gewindeabschnitt aufweist.

Die Erfindung wird nachfolgend anhand eines in der Zeichnung dargestellten Ausführungsbeispiels näher erläutert. Es zeigen:
- Figur 1: einen erfindungsgemäßen Abstandshalter in Explosionsdarstellung; und
- Figur 2: eine Abstandsmontage mit dem erfindungsgemäßen Abstandshalter gemäß Figur 1.

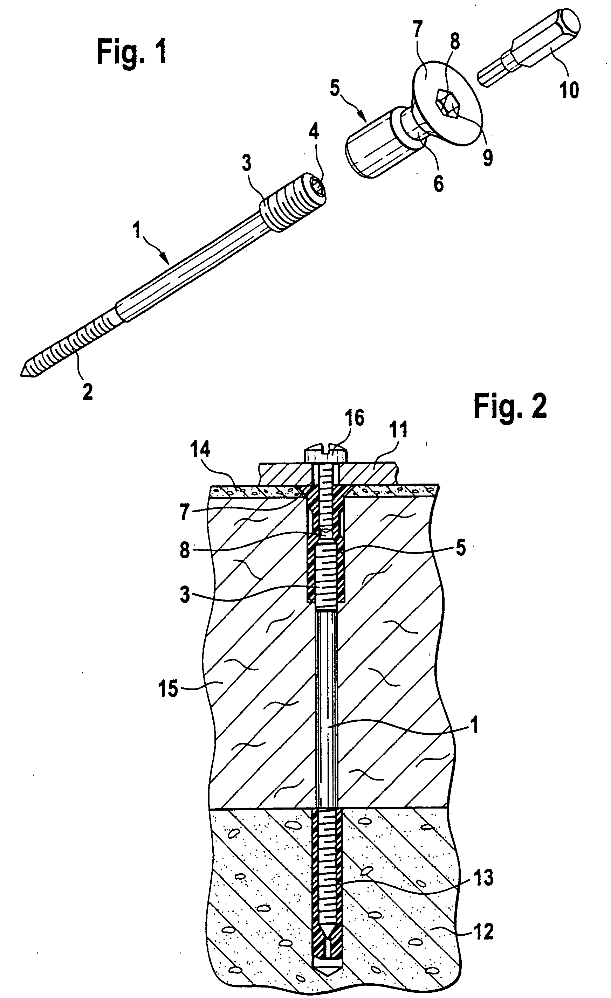

Figur 1 zeigt eine Distanzschraube 1 mit einem vorderen Gewindeabschnitt 2 und einem hinteren Gewindeabschnitt 3, der einen etwas größeren Querschnitt als der vordere Abschnitt 2 aufweist. Am hinteren Stirnende der Distanzschraube 1 ist eine als Innensechskant ausgebildete Werkzeugaufnahme 4 angeordnet. Auf den hinteren Gewindeabschnitt 3 wird eine Abstandshülse 5 vorzugsweise bereits werksseitig fest aufgedreht, so dass die Distanzschraube 1 und die Abstandshülse 5 vormontiert einen Abstandshalter bilden.

Die Abstandshülse 5 weist eine Einschnürung 6 auf, in deren Bereich sich eine verengte Aufnahmebohrung 8 für eine in Figur 1 nicht dargestellte Befestigungsschraube befindet. Am hinteren Ende der Abstandshülse 5 ist ein als Senkkopf aufgebildeter radial abstehender Rand 7 angeordnet, der eine großflächige Auflage für den zu befestigenden Gegenstand bildet. Das hintere Ende der Aufnahmebohrung 8 ist mit einer als Werkzeugaufnahme 9 ausgebildeten Erweiterung versehen. Zum Eindrehen der Distanzschraube 1 beispielsweise in einen Dübel wird ein Werkzeug 10 verwendet, das einen gleichzeitigen Eingriff in die Werkzeugaufnahme 4 der Distanzschraube 1 und der Werkzeugaufnahme 9 der Abstandshülse 5 ermöglicht.

In Figur 2 ist die Befestigung eines Gegenstandes 11 mit dem erfindungsgemäßen Abstandshalter dargestellt. Zur Verankerung der Distanzschraube 1 in einem Mauerwerk 12 wird diese in den Dübel 13 mit der auf dem hinteren Gewindeabschnitt 3 aufgeschraubten Abstandshülse 5 so weit eingedreht, bis der Rand 7 der Abstandshülse 5 bündig mit der Außenfläche der eine Putzschale 14 aufweisenden Dämmschicht 15 abschließt. Der zu befestigende Gegenstand 11 wird danach auf die Stirnseite des Rands 7 aufgelegt und mit der Befestigungsschraube 16, die in die verengte Aufnahmebohrung 8 der Abstandshülse 5 eingedreht wird, befestigt. Die Abstandshülse 5 ist vorzugsweise aus Kunststoff im Spritzgießverfahren hergestellt. Damit wird einerseits eine Kältebrücke vermieden, da zwischen der Distanzschraube 1 und der Befestigungsschraube 16 ein Abstand besteht, und andererseits Dehn- und Schrumpfbewegungen durch Temperaturschwankungen ausgeglichen.

## Patentansprüche

1. Abstandshalter für die Befestigung eines Gegenstandes an einer eine Dämmschicht aufweisenden Wand, bestehend aus einer Distanzschraube (1) mit einer Werkzeugaufnahme (4) und zwei im Abstand angeordneten Gewindeabschnitten (2, 3), wobei der vordere Gewindeabschnitt (2) im Mauerwerk verankerbar ist, und aus einer Abstandshülse (5), die auf den hinteren Gewindeabschnitt (3) der Distanzschraube (1) aufgeschraubt ist und die eine über das hintere Ende der Distanzschraube (1) überstehende Verlängerung mit einer Aufnahmebohrung (8) für eine Befestigungsschraube (16) aufweist, **dadurch gekennzeichnet, dass** die Abstandshülse (5) an ihrem hinteren Ende eine als Werkzeugaufnahme (9) ausgebildete Erweiterung der Aufnahmebohrung (8) aufweist.

2. Abstandshalter nach Anspruch 1, **dadurch gekennzeichnet, dass** die Abstandshülse (5) ein Kunststoffteil ist und einen vorzugsweise als Senkkopf ausgebildeten Rand (7) aufweist.

3. Abstandshalter nach Anspruch 1, **dadurch gekennzeichnet, dass** der Durchmesser der Aufnahmebohrung (8) für die Befestigungsschraube (16) kleiner ist als der vordere und auf den Gewindeabschnitt (3) der Distanzschraube (1) aufschraubbare Teil der Bohrung.

4. Abstandshalter nach Anspruch 1, **dadurch gekennzeichnet, dass** der hintere Gewindeabschnitt (3) der Distanzschraube (1) einen größeren Querschnitt als der vordere Gewindeabschnitt (2) aufweist.

## Claims

1. Spacer for fixing an article to a wall having an insulating layer, consisting of a distance screw (1) having a tool recess (4) and two threaded portions (2, 3) arranged a distance apart, the front threaded portion (2) being capable of being anchored in masonry, and of a spacer sleeve (5) that is screwed onto the rear threaded portion (3) of the distance screw (1) and has an extension protruding beyond the rear end of the distance screw (1) and having a receiving bore (8) for a fixing screw (16), **characterised in that**, at its rear end, the spacer sleeve (5) has an enlargement in the form of a tool recess (9) in the receiving bore (8).

2. Spacer according to claim 1, **characterised in that** the spacer sleeve (5) is a plastics material part and has a collar (7) preferably in the form of a countersunk head.

3. Spacer according to claim 1, **characterised in that** the diameter of the receiving bore (8) for the fixing screw (16) is smaller than the front part of the bore screwable onto the threaded portion (3) of the distance screw (1).

4. Spacer according to claim 1, **characterised in that** the rear threaded portion (3) of the distance screw (1) has a larger cross-section than the front threaded portion (2).

## Revendications

1. Entretoise pour la fixation d'un objet sur une paroi comprenant une couche isolante, constituée d'une vis d'écartement (1) comprenant un raccordement d'outil (4) et deux sections filetées (2, 3) disposées à distance, la section filetée avant (2) pouvant être ancrée dans la maçonnerie, et d'une douille d'écartement (5), qui est vissée sur la section filetée arrière (3) de la vis d'écartement (1) et qui comprend un prolongement dépassant de l'extrémité arrière de la vis d'écartement (1) comprenant un alésage de réception (8) pour une vis de fixation (16), **caractérisée en ce que** la douille d'écartement (5) comprend sur son extrémité arrière un élargissement de l'alésage de réception (8) conçu comme un raccordement d'outil (9).

2. Entretoise selon la revendication 1, **caractérisée en ce que** la douille d'écartement (5) comprend une partie en matière plastique et un bord (7) conçu de préférence comme une tête conique.

3. Entretoise selon la revendication 1, **caractérisée en ce que** le diamètre de l'alésage de réception (8) pour la vis de fixation (16) est plus petit que la partie de l'alésage située à l'avant et pouvant être vissée sur la section filetée (3) de la vis d'écartement (1).

4. Entretoise selon la revendication 1, **caractérisée en ce que** la section filetée arrière (3) de la vis d'écartement (1) comprend une plus grande section transversale que la section filetée avant (2).
